# EUROPEAN PATENT SPECIFICATION

(11) **EP 0 511 876 B1**
(45) Date of publication and mention of the grant of the patent: **10.04.1996**
(21) Application number: 92303957.2
(22) Date of filing: 30.04.1992
(51) Int. Cl.: H02K 11/00, H02K 11/02

(54) **A choke-coil fixture for miniature motors**
Befestigungsvorrichtung einer Drosselspule für Kleinstmotoren
Dispositif de fixation d'une bobine de réactance pour moteurs miniatures

(30) Priority: 30.04.1991 JP 30083/91; 30.04.1991 JP 30084/91; 30.04.1991 JP 30085/91; 30.04.1991 JP 30086/91
(43) Date of publication of application: 04.11.1992
(73) Proprietor: MABUCHI MOTOR KABUSHIKI KAISHA, Matsudo-shi, Chiba-ken (JP)
(72) Inventor: Satoh, Hajime, Matsudo-shi, Chiba-ken (JP); Watanabe, Seiichi, Matsudo-shi, Chiba-ken (JP); Yamazaki, Hiroshi, Matsudo-shi, Chiba-ken (JP)
(74) Representative: Hitchcock, Esmond Antony

(56) References cited:
- WO-A-89/06875
- DE-A- 4 027 176
- JP-A-63 272 994
- US-A- 4 268 770

## Description

This invention relates to a mechanism for mounting choke coils incorporated in an end bell closing an end of a motor housing. The invention is particularly concerned with such a mechanism that is effective when a miniature motor is used for an automotive fuel pump.

Choke coils used in miniature electric motors are normally assembled by inserting a soft ferrite in a coil, and securing the assembly with adhesive. This is a time-consuming and laborious technique, and can lead to inaccuracies in the positioning of the coil if the adhesive does not completely cure. Further, adhesives are required which can continue to function in the presence of gasoline if the motor is to be used for an automotive fuel pump, and suitable such adhesives are expensive. In Japanese Specification No. 63/272994, a motor driven fuel pump is described in which a pair of choke coils each having a cylindrical core, is housed in a hole in a bearing holding member at one end of the pump.

The present invention addresses the aforementioned problems. The choke-coil fixture for miniature motors of this invention is used in miniature motors in which choke coils, each having a longitudinal central axis and a soft ferrite core, are inserted longitudinally into recesses formed in an end bell closing an end of a motor housing. The base of each recess is adapted to engage the inner end of a respective soft ferrite core. The terminals have engaging portions for locking to the end bell. The choke coils are locked in place by flat portions of the terminals, pushing on the ends of the cores, with a lead end of each coil being electrically connected to a respective flat portion.

The preferred choke-coil fixtures of the invention have terminals comprising positioning portions for positioning the lead ends of the choke coils with respect to the terminals and cylindrical portions for engaging with and connecting to a power-feeding connecting pin. The cylindrical portion may be adapted to be flexible in size by being plastically deformed.

In another preferred feature, a fixture of the invention can have washers for insulating the other lead ends of the choke coils from the terminals by fitting to the outer ends of the soft ferrite cores.

Some embodiments of the invention and some examples of choke coil fixtures of the prior art will now be described by way of example and with reference to the accompanying schematic drawings wherein:
Figures 1 is an exploded view showing the principle components of a choke coil fixture according to an embodiment of the invention;
Figure 2 is a side view of the end bell shown in Figure 1;
Figure 3 is a side view of a terminal of the kind shown in Figure 1;
Figure 4 is an enlarged detail sectional view showing a choke coil fitted in the end bell of Figure 1;
Figure 5 is a perspective view of the assembled end bell of Figure 1;
Figure 6 is a bottom plan view of a choke-coil housing recess;
Figure 7 is a perspective view of an alternative form of terminal;
Figure 8 illustrates the connection of lead ends to terminals;
Figure 9 is a plan view of another alternative form of terminal;
Figure 10 is an elevation of the terminal shown in Figure 9;
Figure 11 illustrates the attachment of the element of Figure 10 to an end bell;
Figure 12 shows two forms of insulating washer for use in this invention;
Figure 13 is a further perspective view of a choke coil;
Figure 14 shows a choke-coil housing recess;
Figure 15 shows a housing recess with a choke coil installed.
Figures 16 to 18 show the known assembly of a soft ferrite and a coil into a choke coil;
Figure 19 is a perspective view of an end bell of the prior art with recesses for housing choke coils;
Figure 20 illustrates how a choke coil is housed in a recess;
Figure 21 shows the external appearance of a miniature motor.
Figure 22 shows in cross-section an alternative arrangement of the prior art for the connection of supply pins;
Figures 23 and 24 show the longitudinal installation of a choke coil in a housing recess provided on an end bell in another prior art arrangement.

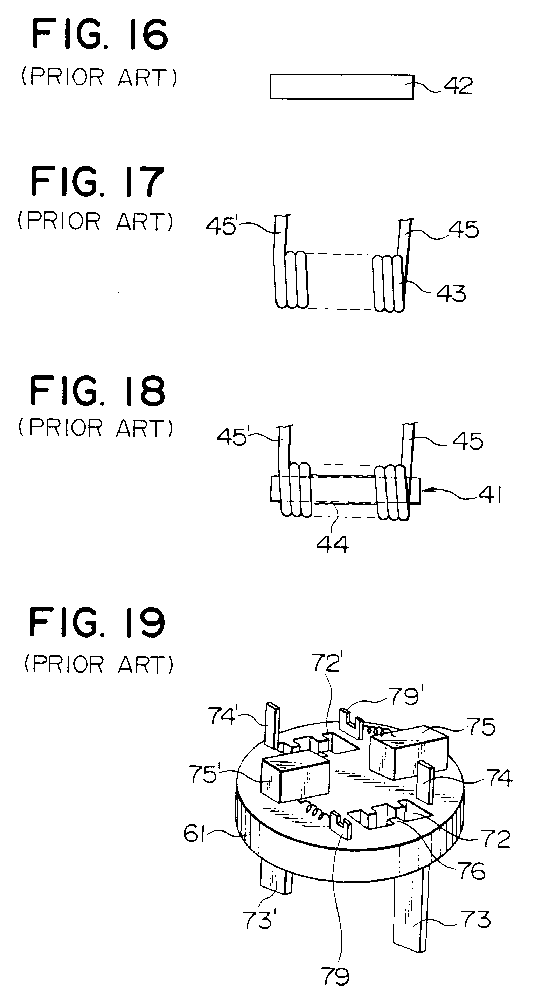

Known fixtures for a miniature electric motor will first be described with reference to Figures 16 to 24.

A choke coil 41 is completed by inserting a soft ferrite 42 to which adhesive 44 is applied onto a coil 43 formed by winding an insulated wire, and then drying the adhesive 44.

In the miniature motor shown in Figure 21 a rotating shaft 92 protrudes from an end of a housing 91, and terminals 73 and 73′ for feeding power from a power source (not shown) are provided on the outer surface of an end bell 61 closing the other end.

On the inner end surface of the end bell 61 shown in Figure 19 are recesses 72 and 72′ for housing choke coils 41. Terminal ends 74 and 74′ electrically connected to the terminals 73 and 73′, brushes 75 and 75′, and terminals 79 and 79′, are also mounted on the end bell 61. At least one rib 76 is formed inside each of the choke-coil housing recesses 72 and 72′. Once installed, each choke coil is held in place by the press-fit between the three ribs 76 in the example shown.

The coil 43 formed by an insulated wire is apt to be deformed by external force. When the soft ferrite 42 is inserted in the coil 43 and bonded thereto the choke coil 41 is not readily deformed even when press-fitted into the choke-coil housing recess 72 because a certain strength is imparted to the choke coil 43. The soft ferrite 42 which is bonded to the coil 43 with the adhesive 44 is not readily dislodged from the recess 72.

The lead ends 45 and 45′ of the choke coil 41 housed in the choke-coil housing recess 72, as described above, are temporarily hooked on notches 77 formed at terminal ends 74, and then electrically connected to the notches 77 by soldering.

Connecting pins connected to a power source (not shown) are connected to the terminals 73 of the miniature motor having the aforementioned construction. In use, current is fed to an end of the connecting pins and flows via the terminal 73, the terminal end 74, the choke coil 41, the terminal 79, and the brush 75′, to a commutator (not shown), and returns along the opposite path to the terminal 73′ to drive the motor in the normal manner.

Because the soft ferrite 42 and the coil 43 are bonded with adhesive 44 in the motor just described, substantial time and labour is involved in applying and drying the adhesive. Further, because a motor used in an automotive fuel pump is immersed in gasoline, the adhesive 44 must be of a special type whose bonding strength does not deteriorate even when immersed in gasoline. In the prior art, the use of such an adhesive to bond the soft ferrite 42 to the coil 43 leads to increased cost. Additionally, when the choke coil 41 is press-fitted in the housing recess 72 formed on the end bell 61, if the size of the rib 76 is too large, the choke coil 41 cannot be received in the recess 72, and if the size of the rib 76 is too small, the choke coil will not be secure. Thus, the size and shape of the rib 76 must be strictly controlled.

In the prior art, however, the size of the choke coil 41 shown in Figure 18 and the choke-coil housing recess 72 shown in Figure 19, and the relative positions of the lead ends 45 and 45′ of the choke coil 41 are not necessarily kept constant. As a result, the lead ends 45 and 45′ have to be drawn to the terminal ends 74 and 74′ and to the terminals 79 and 79′.

The lead ends 45 and 45′ are press-fitted to grooves formed on the terminal ends 74 and 74′ and the terminal 79 and 79′ and then soldered. For this reason, the lead ends 45 and 45′ and the terminal ends 74 and 74′ and the terminals 79 and 79′ are connected with a small contact area in a state where they intersect with each other at right angles. The reliability of electrical connection with an extremely small contact area tends to depend on the state of soldering.

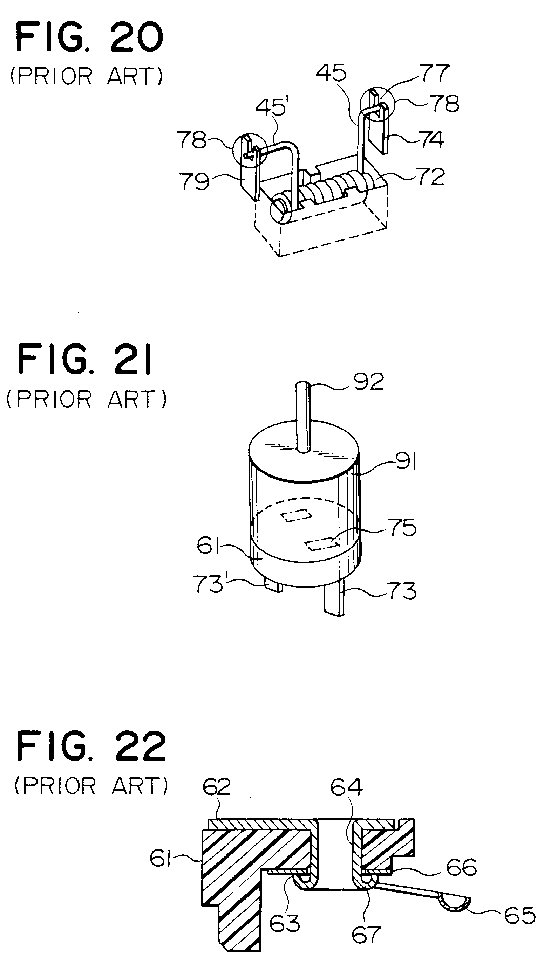

In a miniature motor having a terminal 73 of a shape shown in Figure 21, the end bell 61 made of an insulating material and the terminal 73 made of an electrically conductive material have to be integrally moulded using an insert. This tends to increase manufacturing cost. To cope with this, a construction as shown in Figure 22, has been developed.

In the construction shown in Figure 22 in which the end bell 61 and a cylindrical portion 64 of a terminal 62 are permanently fitted to each other, connecting pins (not shown) for feeding power from a power source are press-fitted to the cylindrical portions 64 of the terminals 62. To positively press-fit the connecting pins into the cylindrical portions 64, however, the distance between the two cylindrical portions (that is, for accepting positive and negative connecting pins, though another cylindrical portion is not shown in the Figure) and the distance between the two connecting pins for inserting into the two cylindrical portions 64 must be strictly controlled. Control of the dimensions of these parts tends to increase the manufacturing cost of miniature motors. Lowering quality control to obtain inexpensive parts could lead to reduced reliability of miniature motors due to the use of parts of poor dimensional accuracy.

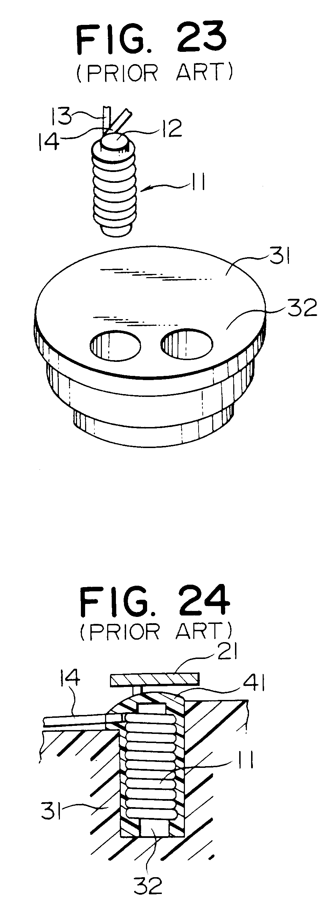

In Figures 23 and 24, a choke coil 11 consists of a coil formed by winding an insulated wire and a soft ferrite 12 inserted into the coil. An end bell 31 closing an end of a motor housing (not shown) has a choke-coil housing recess 32 for accommodating the choke coil 11. When assembling a miniature motor, the choke coil 11 is inserted into the choke-coil housing recess 32, and then the adhesive 41 is applied to the choke-coil housing recess 32 in such a manner as to wrap the entire choke coil 11.

A lead end 13 of the choke coil 11 is electrically connected to the terminal 21 and the other lead end 14 to a terminal of a brush holder (not shown).

In this arrangement however, the entire choke coil 11 is covered with the adhesive 41 and housed in the choke-coil housing recess 32. Thus, the choke coil 11 has low heat dissipation properties. Furthermore, there is a limit in reducing the size of the choke coil 11 because the dimensions of the choke coil 11 are governed by heat dissipation properties. Moreover, and as in the arrangement described previously, the use of the adhesive 41 to fit the choke coil 11 to the choke-coil housing recess 32 requires time and labour to apply the adhesive to the choke coil 11, and the same problems arise from the use of the motors in an automotive fuel pump, where they are immersed in gasoline. In addition, there is a fear of improperly positioning the choke coil 11 in the choke-coil housing recess 32 if the choke coil 11 happens to be moved by mistake before the adhesive 41 is cured. This could result in unstable accuracy in the relative position of the choke coil 11 with respect to the terminal 21 or a brush-holder terminal (not shown).

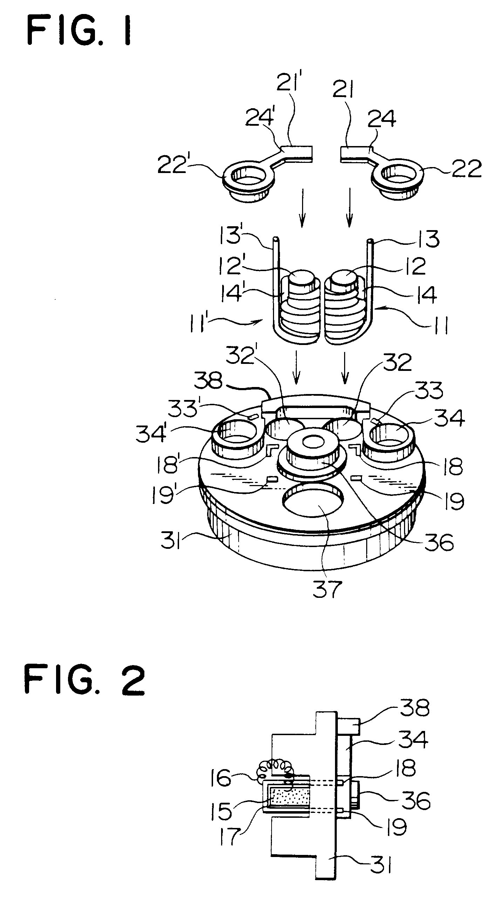

As shown in Figure 1, on the outside surface of an end bell 31 embodying this invention and closing an end of a miniature-motor housing, are formed choke-coil housing recesses 32 and 32′ for housing choke coils 11 and 11′; locking portions, 33 and 33′ for fixedly fitting terminals 21 and 21′ for retaining soft ferrites 12 and 12′ of the choke coils 11 and 11′ housed in the choke coil housing recesses 32 and 32'; and terminal engaging recesses 34 and 34′ for engaging with cylindrical portions 22 and 22′ of the terminals 21 and 21′. Also shown are a motor shaft 36; an opening 37 for inserting a check valve when gasoline is present in a space between the rotor and the stator; a projection 38 for preventing the retaining portions of the terminal 21 and 21′ from moving. A brush-holder terminal inserting hole (not visible in the Figure) is additionally provided.

As shown in Figure 2, on the opposite side of the end bell 31 are fitted brush holders 15 (only one is shown) to which brushes 17 (only one is shown) are installed by inserting brush-holder terminals 18 and 19 into the brush-holder inserting holes described above. The brush holders 15 and 15′ have pigtails 16.

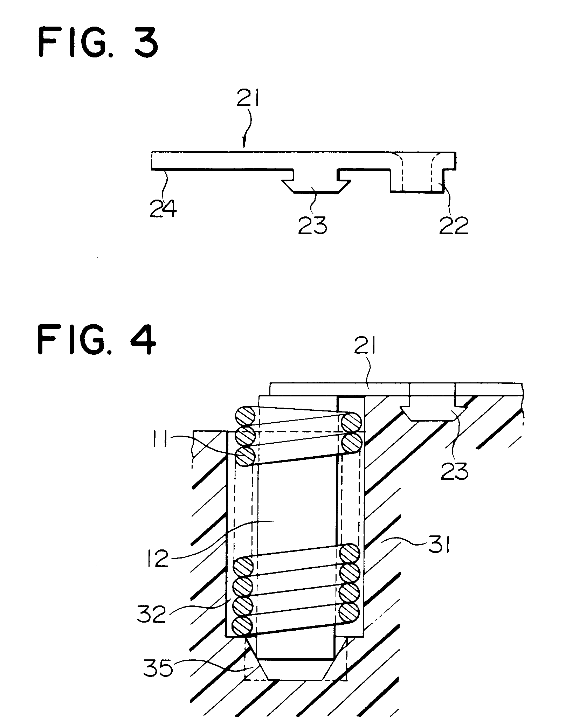

The terminal 21 shown in Figure 3 consists of a cylindrical portion 22 formed into a cylindrical shape to accommodate a connecting pin (not shown) when the miniature motor is connected to an external power source (not shown), an engaging portion 23 for engaging with the locking portion 33 of the end bell 31, and a flat portion 24 for electrically connected to lead ends 13 or 13′ of the choke coil 11 shown in Figure 1.

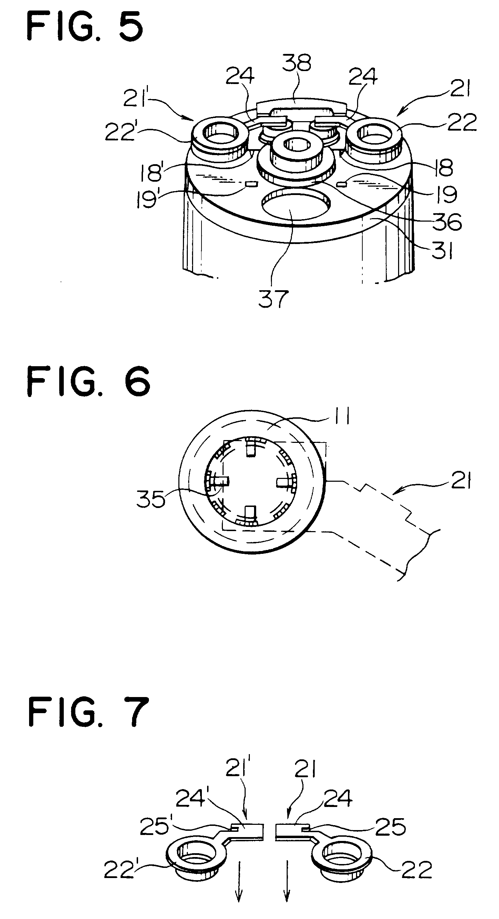

The choke-coil housing recess 32 formed on the end bell 31 has at least one rib 35 formed on the bottom thereof as shown in Figures 4 and 6.

The choke coils 11 and 11′ are inserted into the inside of the choke-coil housing recesses 32 and 32′ with the lead ends 13 and 13′ directed upwards. The ends of the soft ferrites 12 and 12′ inserted into the choke coils 11 and 11′ are forced onto the rib 35 formed at the bottom of the choke-coil housing recesses 32 and 32′. Next, the cylindrical portions 22 and 22′ and the engaging portions 23 and 23'; of the terminals 21 and 21′ are engaged with the terminal engaging recesses 34 and 34′ and the locking portions 33 and 33′, respectively.

Simultaneously with the installation of the terminals 21 and 21′, the flat portions 24 and 24′ of the terminals 21 and 21′ push the top of the choke coils 11 and 11′. The lead ends 13 and 13′ of the choke coils 11 and 11' are bent to an angle of 90 degrees and soldered to the flat portions 24 and 24' of the terminals 21 and 21'.

The other lead ends 14 and 14' of the choke coils 11 and 11' are electrically connected to the brush-holder terminals 18 and 18' by soldering, for example. In this way, the choke coils 11 and 11' are fixedly fitted by the choke-coil housing recesses 32 and 32' provided on the end bell 31 and the terminal flat portions 24 and 24'.

A miniature motor having the aforementioned construction can be connected to a power source by the engagement of connecting pins with the terminal engaging recesses 34 and 34'.

Current fed from one end of the power source flows via the cylindrical portion 22 of the terminal 21, the flat portion 24 of the terminal 21, the lead end 13 of the choke coil 11 connected to the flat portion 24, the coke coil 11, the lead end 14, the brush-holder terminal 18, and from the brush 17 to a commutator (not shown) on the motor rotor. The return path is via the brush 17', the brush-holder terminal 18', the lead end 14' of the choke coil 11', the choke coil 11', the lead end 13', the flat portion 24' of the terminal 21' to the cylindrical portion 22' of the terminal 21'.

According to the above embodiment of the invention, the choke coils are inserted in the longitudinal direction into the recesses provided on the end bell, and fixedly fitted to the recesses by the bottom parts of the recesses and the terminals. Thus, the need for adhesive and labour to apply adhesive to the choke coil is eliminated, making it possible to provide an inexpensive miniature motor.

The aforementioned construction prevents the choke coil from falling out of the recess provided on the end bell without increasing the machining accuracy required in press-fitting the choke coil.

The terminals 21 and 21' shown in Figure 7 comprise cylindrical portions 22 and 22' formed at one end thereof into a cylindrical shape to engage the inside surface thereof with ends of a connecting pin (not shown) for connection to an external power source. Flat portions 24 and 24′ push on the ends of soft ferrites 12 and 12′ (refer to Figure 1) and electrically connect to lead ends 13 and 13′ of the choke coils 11 and 11′. Portions 25 and 25′ are provided for positioning the lead ends 13 and 13′ shown in Figure 1.

The positioning portions 25 and 25′ may be of any shape, including notches or grooves, so long as the relative positions of the lead ends 13 and 13′, and 14 and 14′ can be controlled.

Next, the cylindrical portion 22 and 22′ and the engaging portions 23 and 23′ of the terminals 21 and 21′ are engaged with the terminal engaging recesses 34 and 34′ and the locking portions 33 and 33′. When the terminals 21 and 21′ are installed, the flat portions 24 and 24′ of the terminals 21 and 21′ push on the top ends of the choke coils 11 and 11′.

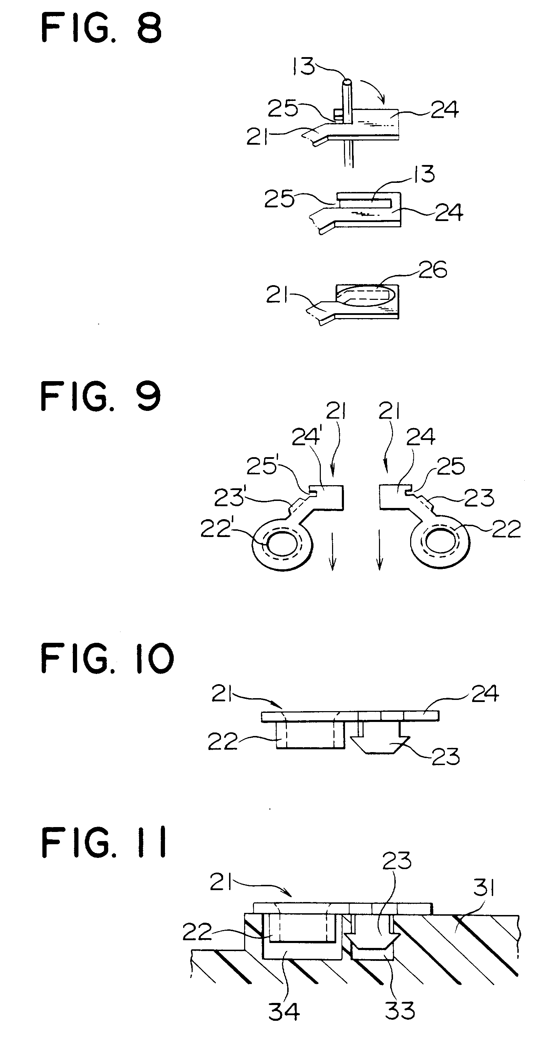

In this state, the lead end 13 of the choke coil 11 is in such a positional relationship as to make contact with the positioning portion 25 of the terminal 21, as shown in Figure 8, and bent to an angle of 90 degrees and soldered to the flat portion 24 of the terminal 21 by solder 26.

In this way, the lead ends 13 and 13′of the choke coils 11 and 11′ are easily positioned, and soldered with high reliability to the flat portions 24 and 24′ having a large contact area.

Thus, electrical connection between the connecting pins and the terminals for connection to an external power source can be performed easily and positively.

According to this embodiment of the invention, the choke coils are inserted in the longitudinal direction into the recesses, and the lead ends drawn from the choke coils in the longitudinal direction are positioned by the positioning portions of the terminals. In addition, soldering the choke coils to flat portions of a large contact area offers positive and reliable electrical connection.

Moreover, since the lead ends are drawn to the positioning portions of the terminals by inserting the choke coils into the choke-coil housing recesses, the lead ends can be fixedly fitted merely by bending, and need not be temporarily hooked to any parts, such as notches. In addition, soldering is carried out at flat portions of the terminals, and molten solder does not flow out. As a result, soldering operation and the state of soldering can be confirmed easily.

Figure 9 illustrates still another terminal suitable for use in this invention. The terminals 21 and 21' shown in Figure 9 consist of cylindrical portions 22 and 22', on one end thereof, formed into a cylindrical shape for engaging the inside surface thereof with the connecting pins (not shown), and engaging portions 23,23' for engaging with the locking portions 33 and 33' of the end bell 31. On the other end thereof, flat portions 24 and 24' are provided for pushing the top ends of the soft ferrites 12 and 12' (refer to Figure 1) and electrically connecting to the lead ends 13 and 13' of the choke coils 11 and 11'. Portions 25 and 25' are used for positioning the lead ends 13 and 13' shown in Figure 1.

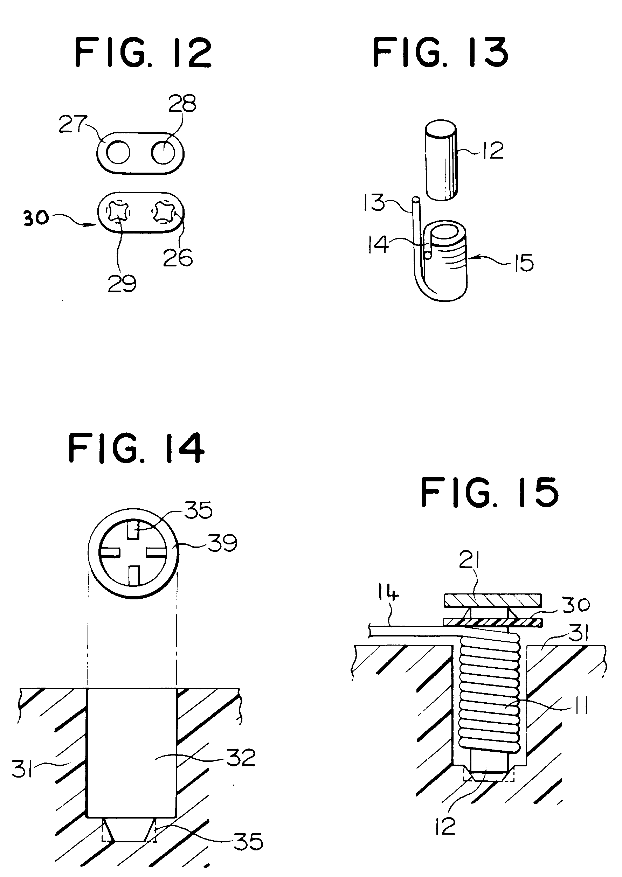

The cylindrical portion of the terminal 21 shown in Figure 10 is formed by burring. The cylindrical portion 22 of the terminal 21 is formed in such a fashion that the rim of the hole of the cylindrical portion 22 of the terminal 21 has tapered portions, and in such a size as to leave a gap between the cylindrical portion 22 and the terminal engaging recess 34 shown in Figure 11.

The positioning portions 25 and 25' of the terminals 21 and 21' may be of any shape, notches or grooves, so long as the positions of the lead ends 13 and 13' can be controlled. The other lead end 14 of the choke coil 11 can be electrically connected to the brush-holder terminal 18 by soldering, for example.

In miniature motors using the aforementioned construction, an end of the connecting pins connected to a power source (not shown) is inserted into the cylindrical portion 22 of the terminal 21. At this time, even when there are irregularities in the distance between the two connecting pins, with the consequence that the distance between the connecting pins does not agree with the distance between the two cylindrical portions 22, the connecting pins can be inserted into the cylindrical portions due to plastic deformation of the cylindrical portions 22. The terminal engaging recess 34 formed on the end bell and the cylindrical portion 22 formed on the terminal in a plastically deformable fashion are engaged with each other with a certain gap. This allows the connecting pin to be positively inserted into the cylindrical portion of the terminal by absorbing some dimensional errors.

The insulating washer 30 shown in Figure 12 is manufactured in the following manner. An insulating plate 27 is punched from an insulating sheet material, such as a plastic material,into a shape shown in the figure, and an opening 28 whose size is larger than the diameter of the soft ferrite 12 of the choke coil 11, which will be described later, is provided on the insulating plate 27. Then, an inserting hole 29 is provided by forming around the opening 28 a claw portion 26 pointing into the opening 28 so as to prevent the soft ferrite 12 inserted into the inserting hole 29 from being rotated.

In the choke coil of Figure 13, an insulated copper wire is wound into a coil 15, and a lead end 13 is drawn from the lower part in the figure upwards along the winding direction of the coil 15, and the other lead end 14 is drawn sideways from the upper part of the coil 15. A soft ferrite 12 is inserted in the coil 15.

In Figure 14, a choke-coil housing recess 32 is formed on the end bell, with at least one rib 35 provided on the bottom 39 thereof. The choke coil 11 is inserted into the choke-coil housing recess 32 provided on the end bell having the aforementioned construction, with the lead end 13 directed upwards. The end of the soft ferrite 12 inserted into the choke coil 11 is press-fitted into the rib 35 formed on the bottom of the choke-coil housing recess 32.

Next, the insulating washer 30 is fitted to the soft ferrite 12. The cylindrical portion 22 and the engaging portion 23 of the terminal 21 are engaged with the terminal engaging recess 34 and the locking portion 33, respectively.

As shown in Figure 15, the insulating washer 30, which is interposed between the terminal 21 and the lead end 14, prevents the lead end 14 and the terminal 21 from being shortcircuited.

According to this embodiment of the invention, because the insulating washer is interposed between the choke coil and the terminal, not only the lead end of the choke coil is insulated from the terminal, but also the distance between the two choke coils is kept at a predetermined value. Thus, the relative positions of the lead end of the choke coil and the portion at which the lead end is connected are kept at a predetermined value, leading to improved accuracy and reliability in automatic soldering.

Since the choke coil is inserted in the longitudinal direction into the recess provided on the end bell, and the choke coil is fixed in position by the bottom of the recess and the terminal, the use of adhesive is eliminated. Thus, time and labour needed to apply and dry adhesive can also be eliminated. This helps the manufacture of inexpensive miniature motors.

As a result of the elimination of the use of adhesive, small choke coils having good heat dissipation properties can be provided. The miniature motors according to this invention are suitable for use in fuel pumps, etc.

## Claims

1. A choke-coil fixture for miniature motors which comprises choke coils (11,11') each having a longitudinal central axis and a soft ferrite core (12,12'), the choke coils being housed in recesses (32,32') formed in an end bell (31) closing an end of a motor housing, and inserted in the longitudinal direction into said recesses, with the base of each recess (32,32') adapted to engage the inner end of a respective soft ferrite core (12,12'), and motor terminals (21,21') having engaging portions (23,23') for locking to the end bell (31).
CHARACTERISED IN THAT
the choke coils (11,11') are locked in place by flat portions (24,24') of the terminals (21,21'), pushing on the outer ends of the cores (12,12'), with a lead end (13,13') of each choke coil (11,11') being electrically connected to a respective flat portion (24,24').

2. A choke-coil fixture for miniature motors according to Claim 1 wherein the terminals (21,21') comprise positioning portions (25,25') for positioning the lead ends (13,13') of the choke coils (11,11') with respect to the terminals; and cylindrical portions (22,22') for connecting to pins for the supply of electrical power.

3. A choke-coil fixture for miniature motors according to Claim 1 or Claim 2 including washers (30) for insulating the other lead ends (14,14') of the choke coils (11,11') from the terminals (21,21') by fitting to the outer ends of the soft ferrite cores (12,12').

4. A choke-coil fixture for miniature motors according to any preceding Claim wherein the inner end of each soft ferrite core (12,12') is press-fitted to the base of a respective recess (32,32').

5. A choke-coil fixture for miniature motors according to any preceding Claim wherein the engaging portions (23,23') are engaged with locking portions (33,33') of the end bell (31).

## Patentansprüche

1. Eine Befestigungsvorrichtung einer Drosselspule für Kleinstmotoren, die Drosselspulen (11,11') aufweist, die jeweils eine zentrale Längsachse und einen weichen Ferritkern (12,12') haben, wobei die Drosselspulen in Längsrichtung in Aussparungen (32,32') eingefügt sind, die in einer Endkappe (31) eingebracht sind, welche eine Seite des Motorgehäuses abschließt, wobei der Boden jeder Aussparung (32,32') so ausgeführt ist, daß er das innere Ende des jeweiligen weichen Ferritkerns (12,12') aufnimmt, und wobei die Anschlußklemmen des Motors (21,21') Eingriffsteile (23,23') besitzen, um die Endkappe (31) fest zu verankern,
**dadurch gekennzeichnet**
daß die Drosselspulen (11,11') am Ort verankert sind durch flache Stutzen (24,24') an den Anschlußklemmen (21,21'), die auf die äußeren Enden der Kerne (12,12')aufgeschoben sind, wobei ein Leitungsende (13,13') jeder Drosselspule (11,11') mit jeweils einem flachen Stutzen (24,24') elektrisch verbunden ist.

2. Eine Befestigungsvorrichtung einer Drosselspule für Kleinstmotoren nach Anspruch 1, wobei die Anschlußklemmen (21,21') Positionierführungen (25,25') aufweisen, um die Leitungsenden (13,13') der Drosselspulen (11,11') in Bezug auf die Anschlußklemmen auszurichten, und zylindrische Aufnahmeöffnungen (22,22') , für das Anschließen an die Stifte der elektrischen Energieversorgung.

3. Eine Befestigungsvorrichtung einer Drosselspule für Kleinstmotoren nach Anspruch 1 oder Anspruch 2 , die Unterlegscheiben (30) aufweist, die am äußeren Ende des weichen Ferritkerns (12,12') angebracht sind, um die anderen Leitungsenden (14,14') der Drosselspulen von den Anschlußklemmen (21,21') zu isolieren.

4. Eine Befestigungsvorrichtung einer Drosselspule für Kleinstmotoren nach einem der vorhergehenden Ansprüche, wobei das innere Ende jedes weichen Ferritkerns (12,12') durch einpressen in den Boden einer jeweiligen Aussparung (32,32') eingepaßt ist.

5. Eine Befestigungsvorrichtung einer Drosselspule für Kleinstmotoren nach einem der vorhergehenden Ansprüche, wobei die Eingriffsteile (23,23') in Einrastöffnungen (33,33') der Endkappe (31) eingreifen.

## Revendications

1. Montage de bobines de choc pour moteurs miniatures qui comprend des bobines de choc (11, 11') ayant chacune un axe central longitudinal et un noyau doux en ferrite (12, 12'), les bobines de choc étant logées dans des évidements (32, 32') formés dans un capot d'extrémité (31) fermant une extrémité d'un carter de moteur, et étant introduites dans lesdits évidements dans la direction longitudinale, la partie inférieure de chaque évidement (32, 32') étant adaptée pour venir en prise avec l'extrémité intérieure du noyau doux de ferrite respectif (12, 12'), et les bornes du moteur (21, 21') ayant des parties de prise (23, 23') pour se verrouiller sur le capot d'extrémité (31),
caractérisé en ce que
les bobines de choc (11, 11') sont verrouillées en place par des parties planes (24, 24') des bornes (21, 21') qui appuient sur les extrémités extérieures des noyaux (12, 12'), une connexion d'extrémité (13, 13') de chaque bobine de choc (11, 11') étant électriquement reliée à une partie plane correspondante (24, 24').

2. Montage pour bobines de choc de moteurs miniatures selon la revendication 1, dans lequel les bornes (21, 21') comprennent des parties de positionnement (25, 25') pour positionner les connexions d'extrémités (13, 13') des bobines de choc (11, 11') par rapport aux bornes ; et des parties cylindriques (22, 22') pour être reliées aux broches d'alimentation électrique.

3. Montage pour bobines de choc de moteurs miniatures selon la revendication 1 ou 2, comprenant des rondelles (30) pour isoler les autres connexions d'extrémités (14, 14') des bobines de choc (11, 11') des bornes (21, 21') en s'adaptant sur les extrémités extérieures des noyaux doux en ferrite (12, 12').

4. Montage pour bobines de choc de moteurs miniatures selon l'une quelconque des revendications précédentes, dans lequel l'extrémité intérieure de chaque noyau doux en ferrite (12, 12') est assemblée à force sur la partie inférieure d'un évidement correspondant (32, 32').

5. Montage pour bobines de choc de moteurs miniatures selon l'une quelconque des revendications précédentes, dans lequel les parties de prise (23, 23') sont mises en prise avec les parties de verrouillage (33, 33') du capot d'extrémité (31).
